# EUROPEAN PATENT APPLICATION

(11) **EP 4 088 977 A1**
(43) Date of publication of application: **16.11.2022**
(21) Application number: 21738550.9
(22) Date of filing: 06.01.2021
(51) Int. Cl.: B60R 21/215

(54) **TRIM FOR AUTOMOBILE INTERIOR COMPRISING AIRBAG DOOR HINGE**

(30) Priority: 07.01.2020 CN 202010013413
(71) Applicant: Shanghai Yanfeng Jinqiao Automotive Trim Systems Co., Ltd., Shanghai 201206 (CN)
(72) Inventor: DAI, Xinye, Shanghai 200233 (CN); HOU, Jianfeng, Shanghai 200233 (CN); CUI, Feng, Shanghai 200233 (CN)
(74) Representative: Trinks, Ole
(86) International application number: PCT/CN2021/070415
(87) International publication number: WO 2021/139668

(57) **Abstract**

Provided is a trim component for a vehicle interior comprising: an airbag door, a load-bearing component surrounding the airbag door, and an airbag door hinge. The airbag door hinge is configured for connecting with the airbag door and the load-bearing component, and the airbag door hinge comprises: a fabric layer (1); the fabric layer (1) comprises an extensible part comprising, based on a direction perpendicular to an extension direction of the extensible part, first zones (Z1) and second zones (Z2) disposed alternately, and the first zones (Z1) comprise mesh openings (5) arranged at intervals. The extensible part can be structurally deformed due to the arrangement of a plurality of the mesh openings, which further increases the extensibility of the extensible part, and can reduce the tension applied to the extensible part in the opening process of the airbag door, so that the risk that the fabric layer is broken due to excessive shearing tension applied thereto is avoided.

## Description

The present application claims priority to Chinese Application No. 202010013413.9 titled "TRIM COMPONENT FOR VEHICLE INTERIOR COMPRISING AIRBAG DOOR HINGE" filed on January 7, 2020, the entire content of which is incorporated herein by reference.

### FIELD OF THE INVENTION

The present invention relates to the field of vehicle accessories, and in particular to a trim component for a vehicle interior comprising a vehicle airbag door hinge.

### BACKGROUND

Vehicle airbag assemblies are commonly used trim components for a vehicle interior, which are vehicle accessories for protecting a driver and a passenger. The vehicle airbag assemblies includes a vehicle airbag assembly mounted in a steering wheel to protect a driver, and an airbag assembly mounted in an instrument panel to protect a passenger.

The vehicle airbag assemblies mainly comprise an airbag, an airbag door covering the airbag, and an airbag door hinge connecting the airbag door to a load-bearing component. When the airbag assembly is triggered, the airbag door opens, so that the airbag can be ejected and the airbag door hinge can guide the airbag door when opening.

Depending on a size of the airbag door used, different forces act on the airbag door hinge when the airbag assembly is triggered. The larger the size or the heavier the weight of the airbag door is, the greater the force acting on the airbag door hinge is.

For the airbag door hinge, in one aspect, it is necessary to ensure that the airbag door is easy to open when the airbag assembly is triggered; in another aspect, in order not to endanger persons in the airbag area, it is necessary to ensure that the airbag door does not come loose from the load-bearing component surrounding the airbag door in any case. There are vehicle airbag door hinges made of a fabric woven from warp and weft yarns. CN 208774709 U discloses an airbag door hinge with a double-layer structure having a first textile layer (1) and a second textile layer (2), wherein the first textile layer (1) and the second textile layer (2) are connected by a plurality of connecting components (3); wherein a weft spacing L between two adjacent connecting components (3) in a weft direction is 5-200 mm.

### SUMMARY

In one aspect, the present invention relates to a trim component for a vehicle interior, which comprises: an airbag door, a load-bearing component surrounding the airbag door, and an airbag door hinge, wherein the airbag door hinge is configured for connecting with the airbag door and the load-bearing component, and the vehicle airbag door hinge comprises: a fabric layer; wherein the fabric layer comprises an extensible part comprising, based on a direction perpendicular to an extension direction of the extensible part, first zones and second zones disposed alternately, and the first zones comprise mesh openings arranged at intervals.

In one embodiment, the mesh openings have a substantially elliptical shape, a ratio of a length of an axis parallel to the extension direction to a length of an axis perpendicular to the extension direction in the mesh openings is 1:10 to 10:1, preferably 1:5 to 5:1, and more preferably 1:2 to 2:1.

In another embodiment, a plurality of the mesh openings are arranged in the extension direction to form a plurality of rows of the mesh openings, and each row of the mesh openings are staggered with adjacent rows of the mesh openings.

In yet another embodiment, the fabric layer is woven from yarns.

In still another embodiment, the extensible part comprises a first yarn, a second yarn and a third yarn, wherein the first yarn is arranged in a direction perpendicular to the extension direction, the second yarn and the third yarn are routed in a direction perpendicular to the extension direction in a zigzag mode and are wound with the first yarn, and the second yarn is cross-arranged with the third yarn.

In one embodiment, boundaries of the first zone and the second zone are defined by the first yarn and the second and/or third yarn wound therewith and thereby forming loops.

In another embodiment, the first zones comprise the second yarn and/or the third yarn between two adjacent mesh openings, and the second yarn and the third yarn are routed in a direction perpendicular to the extension direction in a zigzag mode.

In yet another embodiment, the second zones comprise the second yarn and/or the third yarn, and the second yarn and the third yarn are routed in a direction perpendicular to the extension direction in a zigzag mode.

In still another embodiment, the mesh openings are bounded in the extension direction by the first yarn, the second yarn and the third yarn.

In one embodiment, the mesh openings are bounded by the crossed second and third yarn in a direction perpendicular to the extension direction.

In another embodiment, the second yarn and/or the third yarn each have an included angle of 1-89°, preferably 1-45°, with the extension direction.

In yet another embodiment, the fabric layer is woven from yarns of one or more materials.

In still another embodiment, the extensible part has an opening density of 1-10 openings/cm2.

In one embodiment, an axis parallel to the extension direction in the mesh openings has a length of 1-10 mm.

In another embodiment, an axis perpendicular to the extension direction has a length of 1-10 mm.

In yet another embodiment, an edge perpendicular to the extension direction in the mesh openings has a length of 1-10 mm.

In still another embodiment, an edge in the extension direction in the mesh openings has a length of 1-10 mm.

In one embodiment, the mesh openings have an area of 1-100 mm2.

In another embodiment, the extensible part has a through-opening rate of 5-80%.

In yet another embodiment, the extensible part has an extension rate of 20-200% in the extension direction.

In still another embodiment, the extensible part has a breaking strength of 500-50,000 N/5 cm in the extension direction.

In one embodiment, the vehicle airbag door hinge further comprises a protective layer covering the fabric layer.

In another embodiment, the load-bearing component comprises: a framework and an airbag frame integrally formed with the framework, wherein the framework defines an opening for deployment of an airbag therethrough, the airbag door is configured to cover the opening, and the airbag door hinge is configured for connecting with the airbag door and the framework or the airbag frame.

In yet another embodiment, the load-bearing component comprises: a framework and an airbag frame connected with the framework, wherein the framework defines an opening for deployment of an airbag therethrough, the airbag door is configured to cover the opening, and the airbag door hinge is configured for connecting with the airbag door and the airbag frame.

According to the vehicle airbag door hinge in the trim component for a vehicle interior of the present invention, the extensible part woven from yarns has high extensibility to prevent the airbag door from being separated from the load-bearing component, and the extensible part can be structurally deformed due to the arrangement of a plurality of mesh openings to further increase the extensibility of the extensible part, thereby solving the following problem that is likely to occur when the airbag door opens due to a low extension rate in the prior art: the vehicle airbag door hinge is broken due to excessive shearing tension and the airbag door flies out when the airbag door is under tension in the deployment process, which results in safety risks. The airbag door hinge in the trim component for a vehicle interior of the present invention can reduce the tension applied to the extensible part in the opening process of the airbag door, so that the risk that the fabric layer is broken due to excessive shearing tension applied to the fabric layer is avoided.

The trim component for a vehicle interior of the present invention has the advantages of being easy to manufacture, being safe and practical, and being suitable for large-scale production.

In the following detailed description of preferred embodiments with reference to the accompanying drawings, the above-mentioned advantages and other advantages and characteristics will be easily appreciated.

### BRIEF DESCRIPTION OF DRAWINGS

For a more complete understanding of the present invention, reference should now be made to the embodiments illustrated in greater detail in the accompanying drawings and described below by way of examples of the present invention, wherein:
FIGURE 1 is a side structural schematic view of a vehicle airbag door hinge according to an embodiment of the present invention;
FIGURE 2 is a structural schematic view of an extensible part of a vehicle airbag door hinge according to an embodiment of the present invention;
FIGURE 3 is a partially enlarged structural schematic view of an extensible part of a vehicle airbag door hinge according to an embodiment of the present invention, showing mesh openings;
FIGURES 4a-4c are structural schematic views of yarns of an extensible part of a vehicle airbag door hinge according to an embodiment of the present invention;
FIGURE 5 is a schematic view of an extensible part of a vehicle airbag door hinge according to Embodiment 1 of the present invention, wherein the extensible part is stretched from an unstretched state to a stretched state until it is stretched to a limit;
FIGURE 6 is a schematic view of an extensible part of a vehicle airbag door hinge according to Embodiment 2 of the present invention, wherein the extensible part is stretched from an unstretched state to a stretched state until it is stretched to a limit;
FIGURE 7 is a schematic view of an extensible part of a vehicle airbag door hinge according to Embodiment 3 of the present invention, wherein the extensible part is stretched from an unstretched state to a stretched state until it is stretched to a limit;
FIGURE 8a is a structural schematic view of a vehicle interior trim component comprising an airbag door hinge according to an embodiment of the present invention;
FIGURE 8b is a structural schematic view of a vehicle interior trim component comprising an airbag door hinge according to another embodiment of the present invention;
FIGURE 8c is a structural schematic view of a vehicle interior trim component comprising an airbag door hinge according to yet another embodiment of the present invention; and
FIGURE 8d is a structural schematic view of a vehicle interior trim component comprising an airbag door hinge according to still another embodiment of the present invention.

### DETAILED DESCRIPTION

As one of ordinary skill in the art will appreciate that various characteristics of the embodiments illustrated and described with reference to any one of the accompanying drawings may be combined with characteristics illustrated in one or more other accompanying drawings to produce other embodiments that are not explicitly illustrated or described. The combination of the characteristics shown provides a representative embodiment for typical application. However, various combinations and modifications of the characteristics consistent with the teachings disclosed herein may be desired for particular application or implementation.

In the specification, the directional terms such as "upper", "lower", "left", and "right" are used for convenience of description, and are not restrictive.

For the terms "first" and "second" used herein for the designations of components in the same relationship, the present invention is not limited to the order described herein.

The term "one or more" or "at least one" used herein represents one, two, three, four, five, six, seven, eight or more.

The terms "about" and "approximately", when used in conjunction with a numerical variable, generally mean that the value of the variable and all values of the variable are within experimental error (e.g., within a 95% confidence interval for the mean) or within ±10% of the specified value, or more.

In the specification, the term "vehicle" or other similar terms generally includes motor vehicles, such as passenger vehicles including sports utility vehicles (SUVs), buses, trucks, and various commercial vehicles, watercrafts including a variety of ships and boats, aircrafts, and the like; and includes hybrid vehicles, electric vehicles, plug-in hybrid electric vehicle, hydrogen-powered vehicles, and other alternative-fuel vehicles (e.g., powered by energy sources other than petroleum). The hybrid vehicles are ones having two or more power sources, such as gasoline and electric hybrid vehicles.

In the specification, the term "extension rate" refers to a ratio of the increased (stretched) length to an original length of a fabric when it is stretched until it breaks. Measurements are typically made using a method well known in the art, such as ISO 13934. The extension rate used herein refers to an extension rate in an extension direction.

In the specification, the term "opening density" refers to a number of mesh openings per unit area (cm2).

In the specification, the term "breaking strength" refers to a ratio of the tension to the broken cross-sectional area, i.e., the stress, at which a material breaks. Measurements are typically made using a method well known in the art, such as ISO 13934. The breaking strength used herein refers to a breaking strength in an extension direction.

In the specification, the term "extension direction" refers to a direction in which a fabric is stretched and extended, i.e., a direction in which an extensible part of the fabric is stretched, and also a direction in which a force is applied for the deployment of an airbag. The term "perpendicular to an extension direction" or "a direction perpendicular to the extension direction" refers to a direction perpendicular to an "extension direction" in the plane of a fabric layer, which may also be referred to as a "transverse direction".

In the specification, a size of a mesh opening is defined by a length of an edge of the mesh opening perpendicular to an extension direction and a length of the edge of the mesh opening in the extension direction. The size of the mesh opening only refers to a size of the area of the mesh opening and does not comprise a width or a size of a yarn itself.

In the specification, the term "through-opening rate" refers to a proportion of an area of the mesh opening part to a total area of an extensible part.

In the specification, the term "airbag door" may also be referred to as an airbag cover having the meaning commonly referred to in the art. When a vehicle airbag assembly is triggered, the airbag door opens, so that the airbag is deployed outward from a space defined by the airbag door and load-bearing component.

In the specification, the "trim component for a vehicle interior" is a part of an instrument panel.

In the specification, the weaving of yarns may be performed by a weaving machine. The weaving machine is, for example, a warp weaving machine or a weft weaving machine, preferably a warp weaving machine. The preferred weaving machine helps to achieve a fabric layer with good stretchability and extensibility. The yarns may be subjected to a looping motion to form loops. The loops may be mutually staggered to form connections in a stringing and sleeving manner. The yarns may also be crossed. The yarns may also be wound with loops, thereby forming a fabric layer by the weaving of the yarns.

The present invention relates to a trim component for a vehicle interior, which comprises: an airbag door, a load-bearing component surrounding the airbag door, and an airbag door hinge, wherein the airbag door hinge is configured for connecting with the airbag door and the load-bearing component, and the airbag door hinge is the airbag door hinge disclosed by the present invention.

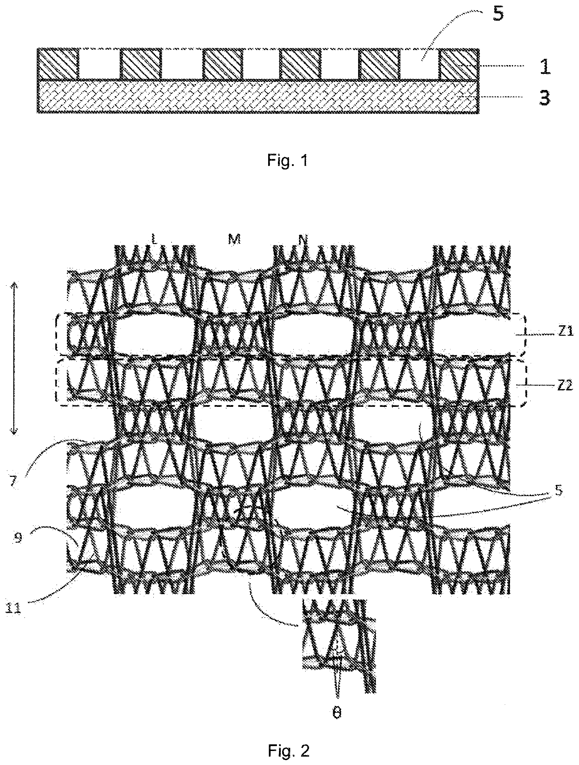

FIGURE 1 is a side structural schematic view of a vehicle airbag door hinge according to an embodiment of the present invention. As shown in FIGURE 1, the vehicle airbag door hinge mainly comprises a fabric layer 1 and a protective layer 3. The protective layer 3 covers the fabric layer 1. The protective layer 3 is a single-layer structure and is made of at least one material, such as non-woven fabric, masking tape, and plastic film. The protective layer 3 is connected with the fabric layer 1 by bonding, sewing, compounding, and other processes. The protective layer 3 blocks an injection molding flow during injection molding to protect the fabric layer 1 from being damaged.

The fabric layer 1 is woven from yarns. The fabric layer 1 comprises an extensible part that can be stretched by a force generated by the airbag door when the airbag door opens and rotates. The extensible part may be located at a position where the airbag door connects with the load-bearing component. The fabric layer 1 may be an extensible part as a whole, or a portion of the fabric layer 1 may be an extensible part.

FIGURE 2 is a structural schematic view of an extensible part of a vehicle airbag door hinge according to an embodiment of the present invention. A direction indicated by the double arrow is an extension direction. As shown in FIGURE 2, the extensible part comprises, based on a direction perpendicular to an extension direction of the extensible part, first zones Z1 and second zones Z2 disposed alternately, and the first zones Z1 comprise mesh openings arranged at intervals. FIGURE 1 (a side structural schematic view of the fabric layer 1) is a side structural schematic view of the extensible part of the fabric layer 1 in a cross-sectional direction of the first zone Z1, showing mesh openings 5 arranged at intervals.

The fabric layer 1 is woven from yarns of one or more materials which include, but are not limited to, synthetic fibers, natural fibers, or a combination thereof, preferably polyethylene, polypropylene, regenerated cellulose fibers, polyamides, carbon fibers, polyacrylonitrile, polyesters, cellulose, cotton, sisal hemp, abaca, kapok, ramie, flax, hemp, jute, animal hair, silk, or a combination thereof, e.g., polyester, aramid, nylon and suplon. For example, the material of yarns may be polyester 300D and polyester 150D.

The weaving of yarns includes the winding and crossing of a yarn itself or between the yarns, the winding and crossing of loops formed from the yarns, and the winding and crossing between the loops formed from the yarns and the yarns.

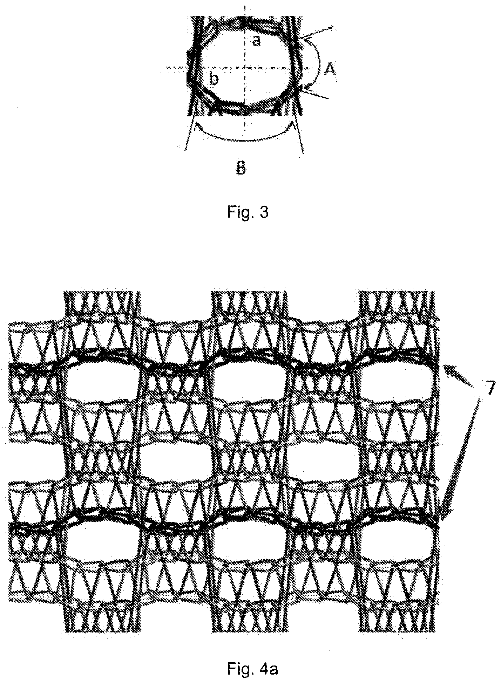

FIGURE 3 is a partially enlarged structural schematic view of an extensible part of a vehicle airbag door hinge according to an embodiment of the present invention. As shown in FIGURE 3, the mesh openings have a substantially elliptical shape. A ratio of an axis a parallel to an extension direction to an axis b perpendicular to the extension direction in the mesh openings is about 1:10 to 10:1, preferably about 1:5 to 5:1, and more preferably about 1:2 to 2:1, such as about 1:1 to 3:5, and 2:5 to 3:5. The elliptical shape used herein includes a circular shape.

In one embodiment, a length of an axis a parallel to an extension direction is less than a length of an axis b perpendicular to the extension direction in the mesh openings. In this case, the mesh openings have an elliptical shape.

In another embodiment, a length of an axis a parallel to an extension direction is equal to a length of an axis b perpendicular to the extension direction in the mesh openings. In this case, the mesh openings have a circular shape.

In yet another embodiment, a length of an axis a parallel to an extension direction is greater than a length of an axis b perpendicular to the extension direction in the mesh openings. In this case, the mesh openings have an elliptical shape.

In a preferred embodiment, an axis a has a length of 1-10 mm, preferably 1.5-5 mm, e.g., about 2, 3, and 4 mm.

In another preferred embodiment, an axis b has a length of 1-10 mm, preferably 1.5-5 mm, e.g., about 2, 3, and 4 mm.

When the extensible part is in a stretched state, a ratio of a length of an axis a to a length of an axis b is greater than that in an unstretched state.

The arrangement of mesh openings at intervals helps to provide sufficient space for the mesh openings during stretch deformation, thereby helping to achieve stretch deformation of the extensible part and increasing extension rate. As shown in FIGURE 2, a plurality of the mesh openings 5 are arranged in the extension direction to form a plurality of rows of the mesh openings, and each row of the mesh openings are staggered with adjacent rows of the mesh openings. That is, each row of the mesh opening are not aligned with adjacent rows of the mesh openings. For example, as illustrated in FIGURE 2, the Mth row of the mesh openings are staggered with the adjacent Lth and Nth rows of the mesh openings. Further, the Lth row of the mesh openings are aligned with the Nth row of the mesh openings. Likewise, the mesh openings in two adjacent first zones Z1 are staggered in a direction perpendicular to the extension direction. That is, the mesh openings in the two adjacent first zones Z1 are not aligned. As a whole, the plurality of the mesh openings 5 are aligned neither in the extension direction of the extensible part nor in a direction perpendicular to the extension direction, but are arranged in a staggered array.

The specific structure of the extensible part of the fabric layer of the vehicle airbag door hinge according to an embodiment of the present invention is described below. In a specific embodiment, as shown in FIGURE 2, the extensible part comprises a first yarn 7, a second yarn 9, and a third yarn 11. The first yarn 7, the second yarn 9 and the third yarn 11 may be of the same material or of different materials. The first yarn 7, the second yarn 9 and the third yarn 11 may be the same or different in thickness and specification. The three yarns may be connected in a form of mutually winding or crossing by every two yarns, or in a form of winding or crossing after forming loops by every two yarns, or in a form of winding or crossing by the yarns and the loops. The plurality of the mesh openings 5 are formed by the connection arrangement of the first yarn 7, the second yarn 9 and the third yarn 11.

The first yarn 7 is arranged in a direction perpendicular to the extension direction. The second yarn 9 and the third yarn 11 are routed in a direction perpendicular to the extension direction in a zigzag mode and are wound with the first yarn 7. The second yarn 9 is cross-arranged with the third yarn 11.

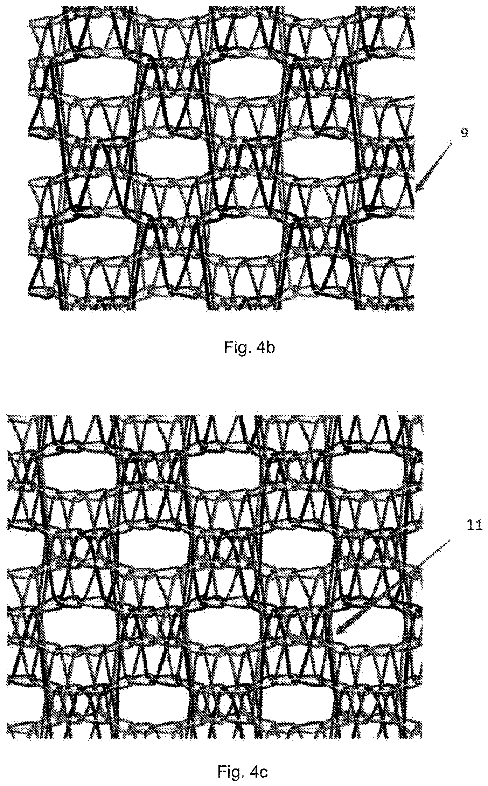

FIGURES 4a-4c show specific connection forms of the yarns in the extensible part in the embodiment of FIGURE 2. For the sake of clarity, the yarns shown in detail in FIGURE 4 are shown in bold. The bold does not represent the actual thickness of the yarn in this embodiment, but merely to show the routes of the yarns more clearly herein. The first yarn 7 is routed as shown by the bold yarn in FIGURE 4a. The second yarn 9 is routed as shown by the bold yarn in FIGURE 4b. The third yarn 11 is routed as shown by the bold yarn in FIGURE 4c.

In a specific embodiment, as shown in FIGURE 4a, the first yarn is arranged in a form of loops in a direction perpendicular to the extension direction and is connected in a stringing and sleeving manner. As shown in FIGURE 4b and FIGURE 4c, the second yarn 9 and the third yarn 11 each are wound with the first yarn 7, forming intersections of the second yarn 9 and the third yarn 11 with the first yarn 7. At the intersection with the first yarn 7, the second yarn 9 and the third yarn 11 each are wound and connected with the first yarn 7 in a form of loops. Such an arrangement facilitates the formation of the extensible part.

In another specific embodiment, the second yarn and third yarn may also be the woven yarns.

In one embodiment, as shown in FIGURE 2, boundaries of the first zone Z1 and the second zone Z2 are defined by the first yarn 7 and the second yarn 9 and/or third yarn 11 wound therewith and thereby forming loops.

In another embodiment, two adjacent mesh openings in the first zone Z1 comprise the second yarn 9 and/or the third yarn 11. The second yarn 9 and the third yarn 11 are routed in a direction perpendicular to the extension direction in a zigzag mode. Such an arrangement facilitates compressive deformation of the extensible part in a direction perpendicular to the extension direction. In a specific embodiment, a length in the extension direction between two adjacent mesh openings in first zones Z1 is close to a length of an axis a of the opening mesh in an unstretched state. A length in a direction perpendicular to the extension direction is close to a length of the axis b of the mesh opening.

In yet another embodiment, the second zone Z2 does not comprise a mesh opening structure as described herein. Second zones Z2 comprise a second yarn 9 and/or a third yarn 11. The second yarn 9 and the third yarn 11 are routed in a direction perpendicular to the extension direction in a zigzag mode. Such an arrangement provides sufficient space for the mesh openings during stretch deformation, thereby helping to achieve stretch deformation of the extensible part in the extension direction and increasing extension rate. Such an arrangement also facilitates the connection between the mesh openings so that the extensible part may form a fabric surface, thereby helping to provide the desired stretch strength of the extensible part. In a specific embodiment, second zones Z2 have a length in the extension direction of about 1-10 mm, preferably 1.5-5 mm.

In one embodiment, as shown in FIGURE 2, the mesh openings 5 are bounded in the extension direction by the first yarn 7, the second yarn 9 and the third yarn 11. In a specific embodiment, as shown in FIGURES 4a-4c, the mesh openings 5 are bounded in the extension direction by the first yarn 7, the second yarn 9 and the third yarn 11 woven into loops.

In another embodiment, as shown in FIGURE 2, the mesh openings 5 are bounded by the crossed second yarn 9 and third yarn 11 in a direction perpendicular to the extension direction. Since the mesh opening 5 is woven from yarns, and the boundaries thereof are also defined by the various connection arrangements of the yarns, it has not an absolutely perfectly elliptical shape, but a substantially elliptical shape. In other embodiments, the mesh opening may also have an elliptical-like shape, including but not limited to, an oblong shape, a polygonal shape, and a rectangular shape.

As shown in FIGURE 3, a length B of an edge of the mesh opening 5 in a direction perpendicular to the extension direction is defined as a length of an edge of the mesh opening 5 formed by the first yarn 7, the second yarn 9 and the third yarn 11. A length A of an edge of the mesh opening 5 in the extension direction is defined as a length of an edge of the mesh opening 5 in the extension direction formed by the crossed second yarn 9 and third yarn 11. The length A of the edge and length B of the edge each are a length of an edge of the mesh opening on one side.

In a specific embodiment, where a length B of an edge is greater than a length A of an edge, the mesh opening 5 has a substantially elliptical shape. In another specific embodiment, where a length B of an edge is equal to a length A of an edge, the mesh opening 5 have a circular shape. In yet another specific embodiment, where a length B of an edge is less than a length A of an edge, the mesh opening 5 has a substantially elliptical shape.

In one embodiment, an edge of the mesh opening 5 has a length B of about 1-10 mm, preferably about 2-6 mm, e.g., about 2, 3, and 4 mm.

In another embodiment, an edge of the mesh opening 5 has a length A of about 1-10 mm, preferably about 2-6 mm, e.g., about 2, 3, and 4 mm.

In a preferred embodiment, the mesh opening has an area of about 1-100 mm2, preferably from about 5-30 mm2, e.g., about 7, and 15 mm2. The area of the mesh opening refers to an area of a single mesh opening.

In another preferred embodiment, the through-opening rate is about 5-80%, preferably about 25-60%, e.g., about 30%, and 40%.

In yet another preferred embodiment, the extensible part has an opening density of about 1-10 openings/cm2, preferably about 3-6 openings/cm2, e.g., about 5 openings/cm2.

In one embodiment, as shown in FIGURE 2, the second yarn and/or the third yarn have an included angle θ of 1-89°, preferably 1-45°, e.g., 15, 20, 30, 40, and 60° with the extension direction.

The setting of parameters such as the mesh opening shape, the mesh opening area, the through-opening rate, the opening density, the included angle between the second yarn and/or the third yarn and the extension direction and other parameters helps to obtain the extensible part with different extensibility to a certain extent, thereby achieving the effect of controllable extension. The extensible part may have an extension rate of about 20-200% in the extension direction, preferably about 50-200%, e.g., about 100%, 150%, and 200%. Such extensibility helps to prevent the airbag door from separating from the load-bearing component. The limitation of parameters of the mesh openings described herein enables structural deformation of the extensible part, which further increases the extensibility of the extensible part, and can reduce the tension applied to the extensible part in the opening process of the airbag door, so that the risk that the fabric layer is broken due to excessive shearing tension applied to the fabric layer is avoided.

According to the extensible part of the vehicle airbag door hinge of the present invention, different breaking strengths can be achieved according to the adopted yarn materials, the arrangement of the yarns and mesh openings and other factors, thereby achieving the effect of adjustable breaking strength. The extensible part has a breaking strength of 500-50,000 N/5 cm, preferably about 600-5000 N/5 cm, e.g., about 800, 1500, and 2000 N/5 cm.

Both ends of the vehicle airbag door hinge according to the present invention in the extension direction can be connected with the airbag door and the load-bearing component surrounding the airbag door, respectively, for example, by injection molding. When the vehicle airbag assembly is triggered, where the airbag door opens from one side, the airbag door rotates around the airbag door hinge as a whole. Alternatively, for an airbag door that opens from a middle to both sides, airbag door hinges are provided at both ends of the airbag door, such that when the vehicle airbag assembly is triggered, both halves of the airbag door rotate about the airbag door hinges. The following embodiments illustrate a scheme in which the airbag door opens from one side, but such embodiments are merely exemplary to illustrate the connection relationship of the airbag door hinge with the airbag door and the load-bearing component. As described above, the trim component for a vehicle interior of the present invention also comprises a scheme in which the airbag door opens from a middle to both sides.

In one embodiment, the load-bearing component comprises: a framework and an airbag frame integrally formed with the framework, wherein the framework defines an opening for deployment of an airbag therethrough, the airbag door is configured to cover the opening, and the airbag door hinge is configured for connecting with the airbag door and the framework.

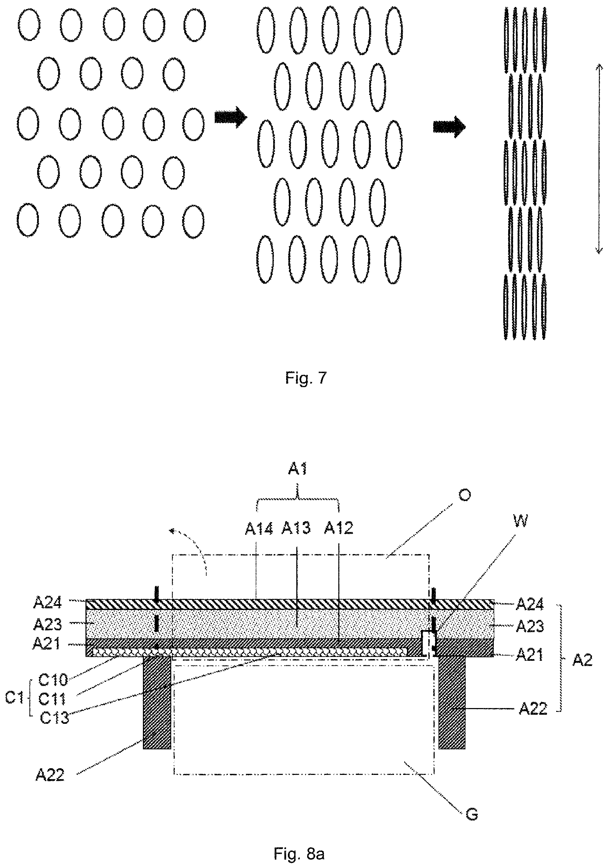

FIGURE 8a is a schematic view of a vehicle interior trim component comprising an airbag door hinge according to a specific embodiment of the present invention, showing the location of an embodiment for the airbag door hinge. As shown in FIGURE 8a, the trim component for a vehicle interior according to an embodiment of the present invention comprises: an airbag door A1 (the assembly indicated by the bold dashed lines), a load-bearing component A2 surrounding the airbag door A1, and an airbag door hinge C1. The hinge C1 is configured for connecting with the airbag door A1 and the load-bearing component A2. The connection may be achieved, for example, using an insert injection molding process.

Specifically, the load-bearing component A2 comprises a framework A21 and an airbag frame A22 integrally formed with the framework A21. The framework A21 defines an opening O for deployment of the airbag G therethrough. In one embodiment, the load-bearing component A2 further comprises a load-bearing component foam layer A23 and/or a load-bearing component skin layer A24. The load-bearing component foam layer A23 and the load-bearing component skin layer A24 are sequentially arranged on the side of the framework A21 remote from the airbag frame A22. The load-bearing component foam layer A23 and the load-bearing component skin layer A24 may be composed of the same material or different materials.

The airbag door A1 is configured to cover the opening O. The airbag door A1 comprises an airbag door substrate A12, and optionally an airbag door foam layer A13 and an airbag door skin layer A14, which are sequentially arranged from bottom to top. Specifically, the airbag door hinge C1 is configured for connecting with the airbag door substrate A12 and the framework A21. The airbag door hinge C1 comprises fixed segments C10 and C13, and a hinge segment C11. The fixed segments C10 and C13 are fixed in the framework A21 and the airbag door substrate A12, respectively. In one embodiment, the hinge segment C11 is also fixed in the framework A21 and the airbag door substrate A12. The fixing is achieved by embedding. Such a fixing mode ensures that the hinge segment C11 is not in a loosening state. The airbag door foam layer A13 and the airbag door skin layer A14 may have the same material composition or different material compositions. The fabric layer of the hinge C1, in particular the hinge segment C11, comprises an extensible part described herein.

In one embodiment, the load-bearing component foam layer A23 and the airbag door foam layer A13 have the same material composition. The load-bearing component skin layer A24 and the airbag door skin layer A14 have the same material composition.

In another embodiment, the framework A21 and the airbag door substrate A12 have the same material composition. In yet another embodiment, the framework A21 is integrally formed with the airbag door substrate A12.

The framework A21 further comprises a weakened zone W arranged in the opening covered by the airbag door, on the side remote from the connection of the hinge C1 with the framework A21. The weakened zone W is arranged such that the intersection of the airbag door substrate A12 and the framework A21 has a weaker mechanical strength than the other parts of the airbag door substrate A12 and the framework A21, so that the airbag door can be easily opened and the airbag is deployed from the airbag frame towards the airbag door. The depth of the weakened zone may optionally extend from the framework A21 to the foam layer A23, but should not extend to the skin layer A24. A direction indicated by the dotted arrow in FIGURE 8a is a direction in which the airbag door opens.

In another embodiment, the load-bearing component comprises: a framework and an airbag frame integrally formed with the framework, wherein the framework defines an opening for deployment of an airbag therethrough, the airbag door is configured to cover the opening, and the airbag door hinge is configured for connecting with the airbag door and the airbag frame.

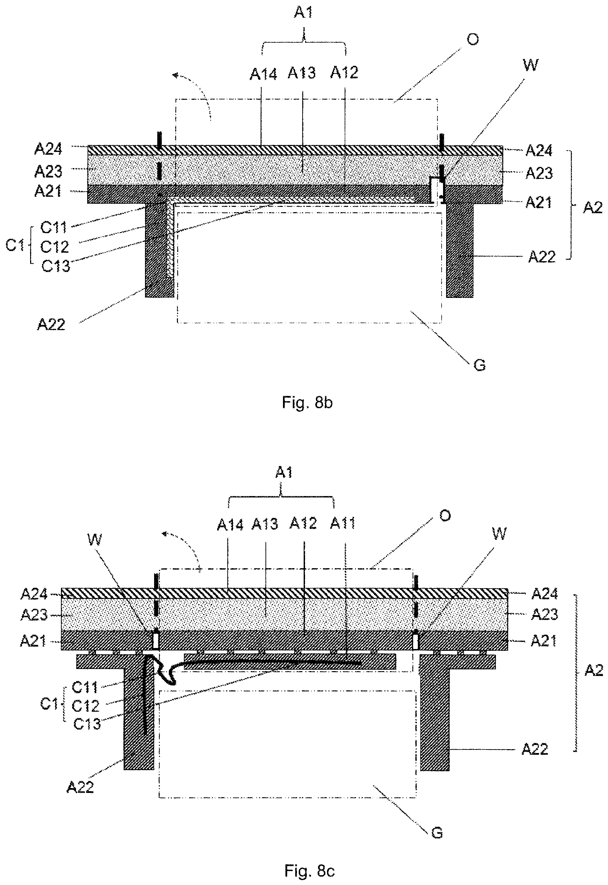

FIGURE 8b is a schematic view of a vehicle interior trim component comprising an airbag door hinge according to another specific embodiment of the present invention, showing the location of another embodiment for the airbag door hinge. In this embodiment, similar to the case in FIGURE 8a, the load-bearing component A2 comprises a framework A21 and an airbag frame A22 integrally formed with the framework A21. The airbag door hinge C1 is configured for connecting with the airbag door A1 and the airbag frame A22. Specifically, the hinge C1 comprises fixed segments C12 and C13, and a hinge segment C11. The hinge segment C11 is fixed in the airbag frame A22 and the airbag door substrate A12, and the fixed segments C12 and C13 of the hinge C1 are fixed in the airbag frame A22 and the airbag door substrate A12, respectively.

In yet another embodiment, the load-bearing component comprises: a framework and an airbag frame connected with the framework, wherein the framework defines an opening for deployment of an airbag therethrough, the airbag door is configured to cover the opening, and the airbag door hinge is configured for connecting with the airbag door and the airbag frame.

FIGURE 8c is a schematic view of a vehicle interior trim component comprising an airbag door hinge according to yet another embodiment of the present invention, showing the location of another embodiment for the airbag door hinge. As shown in FIGURE 8c, the trim component for a vehicle interior according to yet another embodiment of the present invention comprises: an airbag door A1 (the assembly indicated by the bold dashed lines), a load-bearing component A2 surrounding the airbag door A1, and an airbag door hinge C1. The hinge C1 is configured for connecting with the airbag door A1 and the load-bearing component A2. The connection may be achieved, for example, using an insert injection molding process.

Specifically, the load-bearing component A2 comprises a framework A21 and an airbag frame A22 connected with the framework A21. The framework A21 defines an opening O for deployment of the airbag G therethrough. The connection mode includes, but is not limited to, welding, bonding, riveting, screwing, and hooking, preferably welding. In one embodiment, the load-bearing component A2 further comprises a load-bearing component foam layer A23 and/or a load-bearing component skin layer A24. The load-bearing component foam layer A23 and the load-bearing component skin layer A24 are sequentially arranged on the side of the framework A21 remote from the airbag frame A22. The load-bearing component foam layer A23 and the load-bearing component skin layer A24 may be composed of the same material or different materials.

The airbag door A1 is configured to cover the opening. The airbag door A1 comprises a reinforcing door A11, an airbag door substrate A12, and optionally an airbag door foam layer A13 and an airbag door skin layer A14, which are sequentially arranged from bottom to top. The connection mode of the reinforcing door A11 and the airbag door substrate A12 includes, but is not limited to, welding, bonding, riveting, screwing and hooking, preferably welding. The airbag door foam layer A13 and the airbag door skin layer A14 may have the same material composition or different material compositions.

In one embodiment, the load-bearing component foam layer A23 and the airbag door foam layer A13 have the same material composition. The load-bearing component skin layer A24 and the airbag door skin layer A14 have the same material composition.

In another embodiment, the framework A21 and the airbag door substrate A12 have the same material composition. In yet another embodiment, the framework A21 is integrally formed with the airbag door substrate A12.

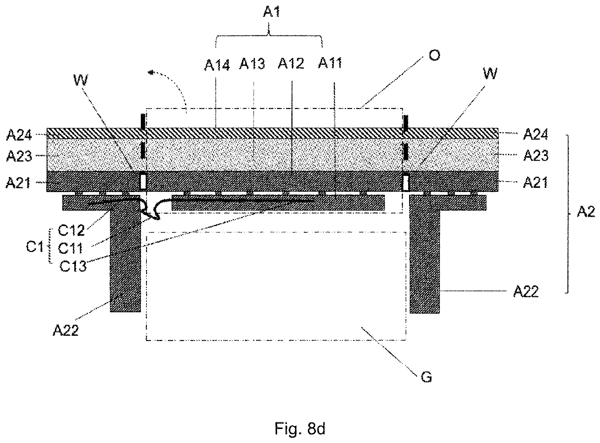

The airbag door hinge C1 is configured for connecting with the reinforcing door A11 in the airbag door and the airbag frame A22. The airbag door hinge C1 comprises fixed segments C12 and C13, and a hinge segment C11. The fixed segments C12 and C13 are fixed in the airbag frame A22 and the reinforcing door A11 in the airbag door A1, respectively. As shown in FIGURE 8c, the fixed segment C12 is fixed to a part in the airbag frame A22 defining the airbag. The fixed segment C12 may also be fixed to a part in the airbag frame A22 connecting with the framework A21, as described in FIGURE 8d.

The hinge segment C11 is in a loosening state as shown in FIGURE 8c and FIGURE 8d. The fabric layer of the hinge C1, in particular the hinge segment C11, comprises an extensible part described herein.

The framework A21 further comprises a weakened zone W arranged on both sides of the opening covered by the airbag door so that the airbag door can be easily opened and the airbag is deployed from the airbag frame towards the airbag door. The depth of the weakened zone may optionally extend from the framework A21 to the foam layer A23, but should not extend to the skin layer A24. A direction indicated by arrows in FIGURE 8c and FIGURE 8d is a direction in which the airbag door opens.

In one embodiment, a framework A21 and an airbag frame A22 are of materials commonly used in the art, including but not limited to, polyvinyl chloride, polypropylene, polyacrylonitrile-butadiene-styrene, polyester, and polyurethane.

### Embodiment 1

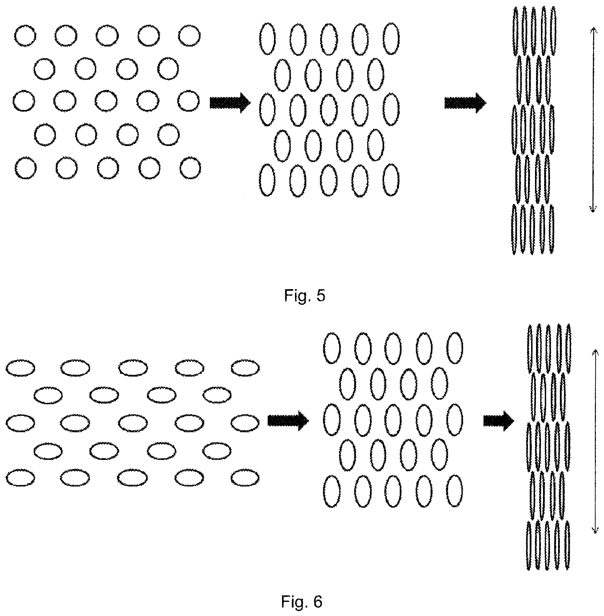

FIGURE 5 is a structural schematic view of an extensible part of a vehicle airbag door hinge according to Embodiment 1 of the present invention, wherein the extensible part is stretched from an unstretched state to a stretched state until it is stretched to a limit. A direction of the double arrow in FIGURE 5 is an extension direction. In this embodiment, a length of an axis b perpendicular to the extension direction in the mesh opening 5 is equal to a length of an axis a parallel to the extension direction in the mesh opening 5. That is, the mesh opening 5 has a circular shape. When the airbag door opens, the airbag door hinge is stretched by the deformation of the mesh opening 5, serving an extension function. When the mesh opening 5 is stretched to a limit, the fabric layer begins to exert a restraining effect on the airbag door.

The yarns are woven using the weaving mode in FIGURE 2. The second yarn and the third yarn each have an included angle θ of 15-30°, preferably 20°, with the extension direction.

A ratio of the length of the axis a parallel to the extension direction to the length of the axis b perpendicular to the extension direction is 1:1. The axis a has a length of 3 mm. The axis b has a length of 3 mm. An edge perpendicular to the extension direction in the mesh opening has a length of 3 mm, and an edge in the extension direction in the mesh opening has a length of 3 mm. The mesh opening has an area of 7 mm2. The extensible part has an opening density of 5 openings/cm2. The extensible part has a through-opening rate of 30%.

The first yarn, the second yarn and the third yarn all use polyester yarn 300D. The extensible part has an extension rate of 150% in the extension direction. The extensible part has a breaking strength of 1500 N/5 cm.

### Embodiment 2

FIGURE 6 is a structural schematic view of an extensible part of a vehicle airbag door hinge according to Embodiment 2 of the present invention, wherein the extensible part is stretched from an unstretched state to a stretched state until it is stretched to a limit. A direction of the double arrow in FIGURE 6 is an extension direction. In this embodiment, a length of an axis b perpendicular to the extension direction in the mesh opening 5 is great than a length of an axis a parallel to the extension direction in the mesh opening 5. That is, the mesh opening 5 has an elliptical shape. When the airbag door opens, the airbag door hinge is stretched by the deformation of the mesh opening 5, serving an extension function. When the mesh opening 5 is stretched to a limit, the fabric layer begins to exert a restraining effect on the airbag door.

The yarns are woven using the weaving mode in FIGURE 2. The second yarn and the third yarn each have an included angle of 30° with the extension direction.

A ratio of the length of the axis a parallel to the extension direction to the length of the axis b perpendicular to the extension direction is 1:2. The axis a has a length of 2 mm. The axis b has a length of 4 mm. An edge perpendicular to the extension direction in the mesh opening has a length of 4 mm, and an edge in the extension direction in the mesh opening has a length of 2 mm. The mesh opening has an area of about 7 mm2. The extensible part has an opening density of 5 openings/cm2. The extensible part has a through-opening rate of 30%.

The first yarn, the second yarn and the third yarn all use polyester yarn 300D. The extensible part has an extension rate of 200% in the extension direction. The extensible part has a breaking strength of 800 N/5 cm.

### Embodiment 3

FIGURE 7 is a structural schematic view of an extensible part of a vehicle airbag door hinge according to Embodiment 3 of the present invention, wherein the extensible part is stretched from an unstretched state to a stretched state until it is stretched to a limit. A direction of the double arrow in FIGURE 7 is an extension direction. In this embodiment, a length of an axis b perpendicular to the extension direction in the mesh opening 5 is less than a length of an axis a parallel to the extension direction in the mesh opening 5. That is, the mesh opening 5 has an elliptical shape. When the airbag door opens, the airbag door hinge is stretched by the deformation of the mesh opening 5, serving an extension function. When the mesh opening 5 is stretched to a limit, the fabric layer begins to exert a restraining effect on the airbag door.

The yarns are woven using the weaving mode in FIGURE 2. The second yarn and the third yarn each have an included angle of 15° with the extension direction.

A ratio of the length of the axis a parallel to the extension direction to the length of the axis b perpendicular to the extension direction is 2:1. The axis a has a length of 4 mm. The axis b has a length of 2 mm. An edge perpendicular to the extension direction in the mesh opening has a length of 2 mm, and an edge in the extension direction in the mesh opening has a length of 4 mm. The mesh opening has an area of about 7 mm2. The extensible part has an opening density of 5 openings/cm2. The extensible part has a through-opening rate of 30%.

The first yarn, the second yarn and the third yarn all use polyester yarn 300D. The extensible part has an extension rate of 100% in the extension direction. The extensible part has a breaking strength of 2000 N/5 cm.

One skilled in the art will readily recognize, from such discussion and the accompanying drawings and claims, that various changes, modifications and variations can be made therein without departing from the true spirit and fair scope of the present invention defined by the following claims.

## Claims

1. A trim component for a vehicle interior, comprising:
- an airbag door,
- a load-bearing component surrounding the airbag door, and
- an airbag door hinge,
wherein the airbag door hinge is configured for connecting with the airbag door and the load-bearing component,
wherein the vehicle airbag door hinge comprises:
- a fabric layer, wherein the fabric layer comprises an extensible part comprising, based on a direction perpendicular to an extension direction of the extensible part, first zones and second zones disposed alternately, and the first zones comprise mesh openings arranged at intervals.

2. The trim component of Claim 1 wherein the mesh openings have a substantially elliptical shape, and a ratio of a length of an axis parallel to the extension direction to a length of an axis perpendicular to the extension direction in the mesh openings is 1:10 to 10:1, preferably 1:5 to 5:1, and more preferably 1:2 to 2:1.

3. The trim component of Claim 1 or 2 wherein a plurality of the mesh openings are arranged in the extension direction to form a plurality of rows of the mesh openings, and each row of the mesh openings are staggered with adjacent rows of the mesh openings.

4. The trim component of one of Claims 1-3 wherein the fabric layer is woven from yarns.

5. The trim component of one of Claims 1-4 wherein the extensible part comprises a first yarn, a second yarn and a third yarn, wherein
- the first yarn is arranged in a direction perpendicular to the extension direction,
- the second yarn and the third yarn are routed in a direction perpendicular to the extension direction in a zigzag mode and are wound with the first yarn, and
- the second yarn is cross-arranged with the third yarn.

6. The trim component of Claim 5 wherein boundaries of the first zone and the second zone are defined by the first yarn and the second and/or third yarn wound therewith and thereby forming loops.

7. The trim component of Claim 5 or 6 wherein the first zones comprise the second yarn and/or the third yarn between two adjacent mesh openings, and the second yarn and the third yarn are routed in a direction perpendicular to the extension direction in a zigzag mode.

8. The trim component of one of Claims 5-7 wherein the second zones comprise the second yarn and/or the third yarn, and the second yarn and the third yarn are routed in a direction perpendicular to the extension direction in a zigzag mode.

9. The trim component of one of Claims 5-8 wherein the mesh openings are bounded in the extension direction by the first yarn, the second yarn and the third yarn, and/or the mesh openings are bounded by the crossed second and third yarn in a direction perpendicular to the extension direction.

10. The trim component of one of Claims 5-9 wherein the second yarn and/or the third yarn each have an included angle of 1-89°, preferably 1-45°, with the extension direction.

11. The trim component of one of Claims 1-10 wherein the extensible part has an opening density of 1-10 openings/cm2, and/or the mesh openings have an area of 1-100 mm2, and/or the extensible part has a through-opening rate of 5-80%.

12. The trim component of one of Claims 1-11 wherein the axis parallel to the extension direction in the mesh openings has a length of 1-10 mm, and/or the axis perpendicular to the extension direction in the mesh openings has a length of 1-10 mm, and/or an edge perpendicular to the extension direction in the mesh openings has a length of 1-10 mm, and/or an edge in the extension direction in the mesh openings has a length of 1-10 mm.

13. The trim component of one of Claims 1-12 wherein the extensible part has an extension rate of 20-200% in the extension direction, and/or the extensible part has a breaking strength of 500-50,000 N/5 cm in the extension direction.

14. The trim component of one of Claims 1-13 wherein the vehicle airbag door hinge further comprises a protective layer covering the fabric layer.

15. The trim component of one of Claims 1-14 wherein the load-bearing component comprises:
- a framework and an airbag frame integrally formed with the framework, wherein
- the framework defines an opening for deployment of an airbag therethrough,
- the airbag door is configured to cover the opening, and
- the airbag door hinge is configured for connecting with the airbag door and the framework or the airbag frame.

16. The trim component of one of Claims 1-14 wherein the load-bearing component comprises:
- a framework and an airbag frame connected with the framework, wherein
- the framework defines an opening for deployment of an airbag therethrough,
- the airbag door is configured to cover the opening, and
- the airbag door hinge is configured for connecting with the airbag door and the airbag frame.
